(19) Europäisches Patentamt
European Patent Office
Office européen des brevets

(11) Veröffentlichungsnummer: **0 043 499**
**B1**

(12) # EUROPÄISCHE PATENTSCHRIFT

(45) Veröffentlichungstag der Patentschrift: **20.02.85**

(21) Anmeldenummer: **81104874.3**

(22) Anmeldetag: **24.06.81**

(51) Int. Cl.[4]: **C 08 F214/26**, C 08 F210/02, C 08 F 2/38, D 06 M 15/244 // (C08F214/26, 210/02),(C08F210/02, 214/26)

(54) **Verfahren zur Herstellung von wässrigen, kolloidalen Dispersionen von Copolymerisaten des Typs Tetrafluorethylen-Ethylen.**

(30) Priorität: **28.06.80 DE 3024450**

(43) Veröffentlichungstag der Anmeldung: **13.01.82 Patentblatt 82/02**

(45) Bekanntmachung des Hinweises auf die Patenterteilung: **20.02.85 Patentblatt 85/08**

(84) Benannte Vertragsstaaten: **BE DE FR GB IT NL**

(56) Entgegenhaltungen:
**DE-A- 2 639 109**
**FR-A- 1 204 296**
**FR-A- 2 103 276**
**US-A- 2 448 952**
**US-A- 2 479 367**
**US-A- 3 069 401**

(73) Patentinhaber: **HOECHST AKTIENGESELLSCHAFT**
**Postfach 80 03 20**
**D-6230 Frankfurt am Main 80 (DE)**

(72) Erfinder: **Sulzbach, Reinhard Albert, Dr.**
**Kammererstrasse 10**
**D-8263 Burghausen/Salzach (DE)**
Erfinder: **Hartwimmer, Robert, Dr.**
**Della-Croce-Strasse 10a**
**D-8263 Burghausen/Salzach (DE)**

**EP 0 043 499 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von stabilen, wäßrigen, kolloidalen Dispersionen von Copolymerisaten, bestehend aus höchstens 60 Mol-% an copolymerisierten Einheiten des Tetrafluorethylens, 60 bis 40 Mol-% an copolymerisierten Einheiten des Ethylens und an 0 bis 15 Mol-% copolymerisierten Einheiten mindestens eines weiteren α-olefinischen Monomeren durch Copolymerisation dieser Comonomeren in wäßriger Phase in Gegenwart von üblichen fluorierten Emulgatoren, von Mangansäuren oder deren Salzen oder solchen Manganverbindungen, die unter Reaktionsbedingungen in Mangansäuren oder deren Salze übergehen, als Katalysatoren sowie von Kettenübertragungsmitteln, sowie deren Verwendung.

Copolymerisate aus Tetrafluorethylen- und Ethylen-Einheiten sind bekannt. Sie zeigen eine ausgezeichnete Temperatur- und Chemikalienbeständigkeit und können aus der Schmelze nach thermoplastischen Formgebungsverfahren verarbeitet werden. Die ausschließlich aus Tetrafluorethylen- und Ethylen-Einheiten bestehenden Copolymerisate sind allerdings im Temperaturbereich zwischen 150 °C und 200 °C etwas spröde. Eine Verbesserung wird dadurch erreicht, daß man Einheiten von anderen Vinylmonomeren in einem Anteil von bis zu 15 Mol-% in die Ketten dieser Copolymeren einbaut.

Solche Copolymerisate, bestehend aus Tetrafluorethylen, Ethylen und gegebenenfalls weiteren Monomeren werden üblicherweise durch Polymerisation in organischen Lösungsmitteln hergestellt, wobei sich Fluoralkane und Fluorchloralkane als günstige Lösungsmittel erwiesen haben. Bei dieser Art der Copolymerisation in organischen Lösungsmitteln erhält man eine Aufschlämmung der Copolymerisat-Teilchen mit einem mittleren Teilchendurchmesser von $> 10\ \mu m$ im Lösungsmittel. Die hierfür eingesetzten Fluoralkane oder Fluorchloralkane sind kostspielige Substanzen, die möglichst weitgehend zurückgewonnen werden müssen. Es ist daher auch schon versucht worden, die Copolymerisation von Tetrafluorethylen und Ethylen in Gemischen aus Wasser und einem organischen Lösungsmittel oder in rein wäßrigem Reaktionsmedium durchzuführen. Der Einsatz von Fluorchloralkanen im Gemisch mit Wasser wird beschrieben in der japanischen Patentbekanntmachung 49-011 746 und der offengelegten japanischen Patentanmeldung 49-024 295. Aus der DE-OS 24 44 516 ist ein Verfahren bekannt, bei dem zum wäßrigen Reaktionsmedium 10 bis 150 Gew.-% eines Fluorchloralkans als Reaktionsbeschleuniger zugesetzt werden. In der US-PS 24 68 664 und der US-PS 34 01 155 werden Gemische aus tert.-Butylalkohol und Wasser als Reaktionsmedium empfohlen. Nach diesen genannten Verfahren sind jedoch stabile wäßrige Dispersionen, bestehend aus kolloidalen Teilchen von Copolymerisaten des Typs Tetrafluorethylen-Ethylen, nicht herstellbar. Die Herstellung von stabilen wäßrigen, kolloidalen Dispersionen solcher Tetrafluorethylen-Ethylen-Copolymerisate gelingt auch nicht, wenn man unter Bedingungen arbeitet, wie sie für die Herstellung wäßriger, kolloidaler Dispersionen von Polytetrafluorethylen üblich sind, das heißt in Gegenwart von perfluorierten Emulgatoren und wasserlöslichen peroxidischen Verbindungen oder Redox-Systemen als Katalysatoren. Unter diesen Bedingungen findet entweder keine Umsetzung statt oder die Dispersionen koagulieren bereits bei sehr geringem Feststoffgehalt, falls man nicht zusätzlich organische Lösungsmittel, wie beispielsweise Trifluortrichlorethan, als stabilisierende Zusätze verwendet (IT-PS 874 129).

Die Herstellung kolloidaler Dispersionen in rein wäßriger Phase wurde möglich, nachdem gefunden wurde, daß unter Einsatz von Mangansäuren oder deren Salzen als Katalysatoren in Gegenwart von üblichen Emulgatoren wäßrige Dispersionen von Tetrafluorethylen-Ethylen-Copolymerisaten mit einem Feststoffgehalt bis zu etwa 15 Gew.-% erhalten werden können. Dies ist beschrieben in der DE-OS 20 37 028 und der DE-OS 21 32 463. Nach dieser bekannten Arbeitsweise erhält man jedoch wäßrige, kolloidale Dispersionen von Copolymerisaten des Tetrafluorethylens mit Ethylen (und gegebenenfalls mit weiteren Monomeren), die ein für die Verarbeitung des Copolymerisats nach thermoplastischen Formgebungsverfahren zu hohes Molekulargewicht und daraus resultierend eine zu hohe Schmelzviskosität (beziehungsweise einen zu niedrigen Schmelzindex) aufweisen. Als weiteren Nachteil besitzen die nach diesem bekannten Verfahren hergestellten wäßrigen, kolloidalen Dispersionen eine unbefriedigende Dispersionsstabilität, das heißt, sie neigen zur Koagulation und koagulieren gänzlich, wenn man bei der Herstellung einen Copolymerisat-Feststoffgehalt von 15 Gew.-% überschreitet.

Aus der DE-A-2 639 109 ist die Copolymerisation von Tetrafluorethylen mit Hexafluorpropylen und Perfluoralkylvinylethern bekannt, die unter anderem auch unter Erzeugung wäßriger, kolloidaler Dispersionen erfolgen kann. Als Antikoagulationsmittel werden die seit langem bekannten angegeben, wie zum Beispiel Weißöle, Paraffin, Kohlenwasserstoffe und Polyglykolderivate. Diese sind ausreichend, da die Stabilität von kolloidalen Copolymerendispersionen dieser Art keine besonderen Probleme aufwirft. Als mögliches Kettenübertragungsmittel werden Malonester neben vielen anderen erwähnt.

Es bestand somit die Aufgabe, das Verfahren zur Herstellung wäßriger, kolloidaler Dispersionen von Copolymerisaten des Typs Tetrafluorethylen-Ethylen in Gegenwart von Mangansäuren oder deren Salzen als Katalysatoren dahingehend zu verbessern, daß das mittlere Molekulargewicht der kolloidal dispergierten Copolymerisate herabgesetzt und damit die Schmelzviskosität dieser Copolymerisate auf den für den Verarbeitungsprozeß notwendigen Bereich eingestellt wird sowie gleichzeitig die Stabilität der sich bildenden Copolymerisat-Dispersionen so erhöht wird, daß kolloidale Dispersionen von Tetrafluorethylen-Ethylen-Copolymerisaten mit einem Feststoffgehalt von mehr als 15 Gew.-% ohne wesentliche Bildung

von Koagulat direkt durch Copolymerisation in rein wäßriger Phase ohne Zusatz organischer Lösungsmittel hergestellt werden können.

Zur Lösung dieser Aufgabe stellt die vorliegende Erfindung ein Verfahren der eingangs genannten Art zur Verfügung, das dadurch gekennzeichnet ist, daß die Copolymerisation in Gegenwart

a) eines Kettenübertragungsmittels der allgemeinen Formel

$$X—CH_2—COOR$$

worin X = Cl, Br, COOH, COOR', $COCH_3$, $CH_3$, $C_2H_5$ oder $C_3H_7$ ist und R und R' einen Alkylrest mit 1 bis 4 C-Atomen bedeutet, und

b) einer die Dispersion stabilisierenden Verbindung der allgemeinen Formel

$$NH_4-O-\underset{\underset{O}{\|}}{C}-Y\ ,$$

worin Y = $COONH_4$, COOH, $CH_3$, $CH_2OH$, $CH_2COOH$ oder $CH_2COONH_4$ ist, oder eines Gemisches dieser Verbindungen vorgenommen wird, wobei diese die Dispersion stabilisierende Verbindung in einer Konzentration von mindestens 0,001 Mol/l, bezogen auf das wäßrige Reaktionsmedium, zugegen ist.

Es ist zwar bekannt, die Polymerisation von Fluorolefinen in Gegenwart von Kettenübertragungsmitteln vorzunehmen, und es wurde bereits eine große Zahl von Verbindungsklassen für diesen Zweck vorgeschlagen. Auch die Copolymerisation von Tetrafluorethylen und Ethylen (und gegebenenfalls zusätzlichen weiteren Monomeren) in organischen Lösungsmitteln ist bereits vereinzelt in Gegenwart von Kettenübertragungsmitteln vorgenommen worden, beispielsweise in Gegenwart von Aceton oder Cyclohexan. Diese Kettenübertragungsmittel weisen jedoch einen, mehrere oder sämtliche der im folgenden genannten Nachteile auf, wenn die Copolymerisation von Tetrafluorethylen mit Ethylen und gegebenenfalls mit weiteren Monomeren in rein wäßriger Phase durchgeführt wird :

— die molekulargewichtsregelnde Wirkung ist ungenügend,

— die Polymerisationsgeschwindigkeit wird zu stark herabgesetzt,

— die Dispersionsstabilität wird dratisch vermindert,

— die Eigenschaften der durch Koagulation entstehenden pulverförmigen Copolymerisate werden erheblich verschlechtert, beispielsweise manifestiert durch Blasenbildung, Verfärbung oder verminderte mechanische Eigenschaften von daraus hergestellten Formkörpern.

Es war daher überraschend, daß alle diese Nachteile nicht auftreten, wenn man im obengenannten Verfahren eine Kombination aus den genannten Kettenübertragungsmitteln a) und den genannten, die kolloidalen Dispersionen stabilisierenden Verbindungen b) einsetzt.

Bevorzugte Kettenübertragungsmittel a) sind der Dimethylester, der Methylethylester und besonders der Diethylester der Malonsäure.

Die zuzusetzende Menge an Kettenübertragungsmittel hängt ab von dessen molekulargewichtsregelnder Wirkung. Um einen verarbeitungsgerechten Bereich hinsichtlich des Schmelzindex-Wertes (MFI-Wert ; MFI = « melt flow index ») zu erzielen, ist eine Menge von 0,005 bis 0,07 Mol des Kettenübertragungsmittels pro 1 kg an gebildetem Copolymerisat-Feststoff erforderlich, wobei diese Grenzen nicht absolut kritisch sind. Für den bevorzugten Malonsäurediethylester liegt diese Menge bei 0,01 bis 0,035 pro 1 kg an gebildetem Copolymerisat-Feststoff. Will man einen für die Herstellung von Drahtüberzügen besonders günstigen MFI-Wert im Bereich von 15 bis 50 g/10 min (gemessen bei 300 °C und unter Belastung einer Masse von 11 kg) einstellen, so beträgt die Menge 0,02 bis 0,03 pro 1 kg an gebildetem Copolymerisat-Feststoff. Es liegt im Rahmen der Erfindung, daß auch Gemische der genannten Kettenübertragungsmittel zugegeben werden können.

In Kombination mit diesem Kettenübertragungsmittel ist während der Copolymerisation eine die wäßrige, kolloidale Dispersion stabilisierende Verbindung b) aus der Gruppe der obengenannten Monoammonium- oder Diammoniumsalze zugegen, wobei Monoammoniumoxalat und vor allem das Diammoniumoxalat bevorzugt sind. Die genannten stabilisierenden Verbindungen können auch als Hydrate vorliegen. Es können auch Gemische von Verbindungen aus der angegebenen Gruppe eingesetzt werden. Diese die Dispersion stabilisierenden Verbindungen müssen in einer Mindestkonzentration von 0,01 Mol/l, bezogen aus das wäßrige Polymerisationsmedium, zugegen sein. Die Obergrenze, die nicht absolut kritisch ist, liegt bei 0,1 Mol/l, vorzugsweise werden 0,02 bis 0,05 Mol/l eingesetzt.

Die Gesamtmenge an Kettenübertragungsmittel wird vorzugsweise vor Beginn des Polymerisationsstarts in den Reaktor eingebracht. Es ist aber auch möglich, nur eine Teilmenge vorzulegen und die Restmenge portionsweise oder kontinuierlich während der Polymerisation nachzudosieren. Die kritische Untergrenze für das Stabilisierungsmittel beträgt 0,01 Mol pro Liter wäßriges Polymerisationsmedium. Diese Menge muß in den Reaktor von Beginn der Polymerisation vorgelegt werden, darüber hinausgehende Mengen können gegebenenfalls während der Polymerisation nachdosiert werden.

Zweckmäßig werden die genannten, die Dispersion stabilisierenden Verbindungen b) eingesetzt im Gemisch mit Ammoniumsalzen von anorganischen Nichtmetallsäuren. Dies sind insbesondere Ammoniumchlorid, Ammoniumfluorid, Ammoniumdihydrogenphosphat, Ammoniumborat, Ammoniumhydrogensulfat, Ammoniumnitrat und Ammoniumformiat oder auch andere Ammoniumsalze anorganischer Nichtmetallsäuren, die unter den im wäßrigen Medium bei der Copolymerisation herrschenden Bedingungen in die genannten Ammoniumsalze übergehen, das heißt bei pH-Werten von 6 bis 1, vorzugsweise von 4 bis 2. Diese zusätzlich eingesetzten Ammoniumsalze von anorganischen Nichtmetallsäuren werden in einer Menge von 0 bis 0,1 Mol/l wäßriges Polymerisationsmedium zugegeben.

Sowohl die die Dispersion stabilisierenden Verbindungen b) als auch die gegebenenfalls zusätzlich zugegebenen Ammoniumsalze anorganischer Nichtmetallsäuren können in Form der freien Säuren zusammen mit Ammoniak zugesetzt werden, das heißt, sie werden im wäßrigen Polymerisationsmedium *in situ* gebildet.

Als Katalysatoren werden im erfindungsgemäßen Emulsionspolymerisationsverfahren die Säuren und Salze des Mangans eingesetzt, wie sie in der DE-OS 20 37 028 beschrieben sind. Dies sind insbesondere die Salze der Mangansäure (VII), wie Kaliumpermanganat, Natriumpermanganat, Bariumpermanganat, Magnesiumpermanganat; weiterhin Salze der Mangansäure (VI), die Manganate, wie beispielsweise Kaliummanganat, Ammoniummanganat, Natriummanganat und Calciummanganat; ferner eignen sich die Salze der Mangansäure (V), wie Natriumhypomanganat ($Na_3MnO_4 \cdot 10\ H_2O$) und die Salze der Mangansäure (IV), die Manganite. Auch die freien Säuren selbst, sofern sie im wäßrig-sauren Milieu beständig sind, können als Katalysatoren verwendet werden, wie beispielsweise das kristalline Dihydrat der Permangansäure ($HMnO_4 \cdot 2\ H_2O$). Ebenso aktive Katalysatoren sind Substanzen, die erst unter den Bedingungen der Polymerisation in die vorgenannten Verbindungen übergehen, wie beispielsweise Säureanhydride wie Manganheptoxid ($Mn_2O_7$), ferner Oxyhydrate, Säurehalogenide und andere leicht hydrolysierbare höherwertige Manganverbindungen. Am vorteilhaftesten lassen sich Alkalipermanganate und Alkalimanganate oder die entsprechenden $NH_4$-Salze, insbesondere Kaliumpermanganat und Kaliummanganat, verwenden. Die Polymerisationsfreudigkeit der einzelnen Monomeren ist recht unterschiedlich, aber in den meisten Fällen kommt man mit einer Katalysatormenge von 0,001 bis 0,5 Gew.-%, vorzugsweise 0,003 bis 0,3 Gew.-%, bezogen auf die Gesamtmenge der Polymerisationsflotte, aus. Ein Teil dieser Katalysatormenge kann gegebenenfalls während der Polymerisationsdauer nachgeschleust werden.

Als Emulgatoren werden die für die Emulsionspolymerisation von Fluorolefinen üblichen oberflächenaktiven, fluorierten Verbindungen eingesetzt, die in der Lage sind, unter den Polymerisationsbedingungen die Oberflächenspannung um wenigstens 20 mN/m herabzusetzen. Solche fluorierten Emulgatoren sind insbesondere Verbindungen der allgemeinen Formel Y—Rf—Z—M. Darin sind

Y = H, Cl oder F;

Rf = die Gruppe $C_aF_{2a}$, worin a = 5 bis 10 ist, oder die Gruppe

$$CF_2-CF_2-CF_2-O-(\underset{X}{\underset{|}{C}}F-CF_2O)_b-\underset{X}{\underset{|}{C}}F\ ,$$

worin X = F oder $CF_3$ und b = 0 bis 3 ist;

Z = die Gruppe COO oder $SO_3$; und

M = ein Alkalimetall oder —N(R)$_4$, wobei R Wasserstoff oder einen Alkylrest mit 1 bis 2 C-Atomen bedeutet.

Bevorzugt sind die Ammoniumsalze der Perfluoroctansäure und Perfluoroctansulfonsäure. Es können auch Gemische der genannten Emulgatoren eingesetzt werden. Diese Emulgatoren sollen in einer Konzentration von 0,06 bis 1,0 Gew.-%, vorzugsweise von 0,1 bis 0,6 Gew.-%, bezogen auf das wäßrige Polymerisationsmedium, anwesend sein.

Zusätzlich zu diesen fluorierten Emulgatoren können noch oberflächenaktive Stabilisierungsemulgatoren, die sich bezüglich ihrer tensidischen Eigenschaften von den obengenannten stabilisierenden Verbindungen der Komponente b) unterscheiden und die dem Fachmann bekannt sind, zugegeben werden und zwar in einer Menge von 0,005 bis 0,05 Gew.-%, bezogen auf das wäßrige Polymerisationsmedium. Bevorzugte oberflächenaktive Stabilisierungsemulgatoren sind Verbindungen der Formel $R''-(C_6H_4)_c-(O-CH_2-CH_2)_d-OH$, worin R″ eine primäre, sekundäre oder tertiäre Alkylgruppe mit 1 bis 20 C-Atomen bedeutet, c den Wert 0 oder 1 und d Werte von 4 bis 50 annehmen kann.

Auch die fluorierten Emulgatoren und die oberflächenaktiven Stabilisierungsemulgatoren können vor Beginn der Polymerisation in der Gesamtmenge vorgelegt werden, oder es können Teilmengen während der laufenden Polymerisation nachgeschleust werden. Die Nachschleusung soll jedoch beendet sein, bevor ein Feststoffgehalt von 10 Gew.-% erreicht ist.

Der Polymerisationsdruck der gesamten Monomerenmischung liegt im üblichen Bereich von 5 bis 50 bar, vorzugsweise von 10 bis 25 bar. Die Copolymerisation wird im ebenfalls üblichen Temperaturbereich von − 5 bis + 50 °C, vorzugsweise von 20 bis 40 °C, vorgenommen.

Nach dem erfindungemäßen Verfahren sind wäßrige, kolloidale Dispersionen von Copolymeren herstellbar, enthaltend höchstens 60 (und mindestens 30) Mol-% an copolymerisierten Einheiten des Tetrafluorethylens und 60 bis 40 Mol-% an copolymerisierten Einheiten des Ethylens sowie zusätzlich 0 bis

15 Mol-%, vorzugsweise 0 bis 8 Mol-%, mindestens eines weiteren α-olefinischen Monomeren, wobei die untere Grenze des Gehaltes eines solchen oder solcher weiterer Monomerer bei 0,05, vorzugsweise bei 0,5 Mol-% liegt, wenn eines oder mehrere solcher Monomerer gegebenenfalls anwesend sind. Bevorzugt werden Ter- und Quaterpolymere hergestellt. Die Terpolymeren können neben Ethylen und Tetrafluorethylen folgende α-olefinische Monomeren in den genannten Anteilen enthalten.

$c_1$) Perfluorierte Olefine der Formel

$$CF_2 = CF—Rf1$$

worin Rf1 ein Perfluoralkylrest mit 2 bis 10, vorzugsweise mit 2 bis 5 C-Atomen ist. Zu den bevorzugten Verbindungen zählen insbesondere Perfluorpenten, Perfluorhexen und Perfluorhepten. Die Herstellung solcher längerkettiger perfluorierter Olefine ist bekannt und beispielsweise beschrieben in der US-PS 26 68 864.

$c_2$) Perfluorierte Vinylether der Formel

$$CF_2 = CF—O—Rf2$$

worin Rf2 ein Perfluoralkylrest mit 1 bis 10, vorzugsweise 1 bis 4 C-Atomen ist. Zu nennen sind der Perfluor-n-ethyl-, Perfluor-n-butyl- und insbesondere der Perfluor-n-propyl-Rest. Die Herstellung solcher Perfluor (alkylvinyl)-ether ist bekannt aus der US-PS 31 80 895.

$c_3$) Perfluorierte Vinylether der Formel

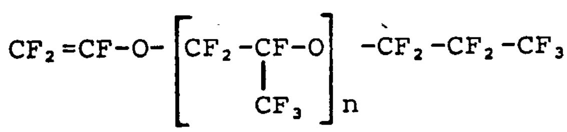
,

worin n = 1 bis 4, vorzugsweise 1 oder 2 ist. Die Herstellung solcher perfluorierter Vinylether ist bekannt aus der US-PS 34 50 684.

$c_4$) Perfluorierte Vinylether der Formel

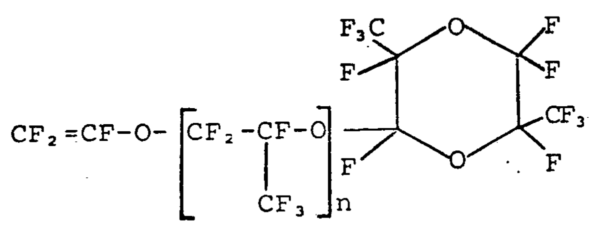

worin n = 0 bis 1, vorzugsweise 0 ist. Die Herstellung dieser Monomeren ist beschrieben in der US-PS 40 13 689.

$c_5$) Perfluor-2-methylen-4-methyl-1,3-dioxolan, dessen Herstellung aus der US-PS 33 08 107 bekannt ist.

$c_6$) Perfluorierte Vinylether der allgemeinen Formel

$$CF_2 = CF—O—(CF_2)_n—COX_1$$

worin $X_1$ für OH, $OR_1$ oder $NR_2R_3$ steht und wobei $R_1$ eine Alkylgruppe mit 1 bis 3 C-Atomen ist und $R_2$ und $R_3$ jeweils für ein Wasserstoffatom oder für $R_1$ stehen und n eine Zahl von 1 bis 10 bedeutet. Die Herstellung solcher Monomeren ist bekannt aus der GB-PS 11 45 445. Bevorzugte ist $X_1$ = OH oder $OCH_3$.

$c_7$) Fluorierte Vinylether der Formel

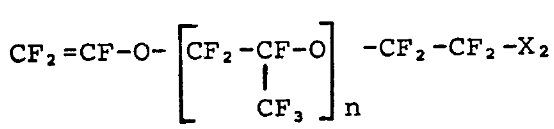
,

worin $X_2$ für $COOR_4$, COOH, oder CN steht, $R_4$ eine Alkylgruppe mit 1 bis 3 C-Atomen und n eine ganze Zahl von 1 bis 4 bedeutet. Die Herstellung solcher Comonomeren ist beschrieben in der US-PS 41 38 426. Bevorzugt ist $X_2$ = COOH oder $COOCH_3$.

$c_8$) Perfluoralkylsubstituierte Vinylverbindungen der Formel

$$CH_2 = CH—Rf3$$

worin Rf3 ein Perfluoralkylrest mit 2 bis 10, vorzugsweise 2 bis 6 C-Atomen ist. Solche teilfluorierten Olefine werden hergestellt durch Anlagerung von Ethylen an ein Perfluoralkyliodid und anschließende Dehydrohalogenierung mit Alkalihydroxid, wie beschrieben in der US-PS 35 35 381.

$c_9$) 1,1,1-Trifluor-2-(trifluormethyl)-4-penten-2-ol

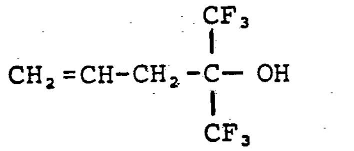 ,

dessen Herstellung aus der US-PS 34 44 148 bekannt ist.

$c_{10}$) Allyl-1-hydroxy-hexafluorisopropylether

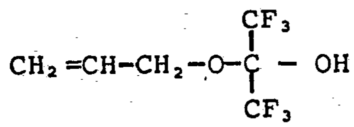 ,

das durch die Anlagerung von Allylalkohol an Hexafluoraceton entsteht, wie beschrieben in der FR-PS 2 178 724.

$c_{11}$) Verbindungen der allgemeinen Formel

$$CH_2 = CH—(CH_2)_n—O—CF_2—CFX_3H$$

worin $X_3$ = F, Cl oder Trifluormethyl, vorzugsweise F und n Null oder 1 ist. Monomere mit n = 1 können hergestellt werden durch die Anlagerung des entsprechenden Fluoroder Chlorfluorolefins an Allylalkohol, wie beschrieben in der US-PS 2 975 161. Monomere mit n = 0 können hergestellt werden nach der US-PS 2 631 975.

$c_{12}$) Allyl- oder Methallylester der Formel

$$CH_2 = CR_5—CH_2—O—CO—R_6$$

worin $R_5$ = H oder $CH_3$ und $R_6$ ein Alkylrest mit 1 bis 3 C-Atomen, vorzugsweise ein Methylrest ist.

$c_{13}$) Vinylester der allgemeinen Formel

$$CH_2 = CH—O—CO—R_7$$

worin $R_7$ ein Alkylrest mit 1 bis 3 C-Atomen, insbesondere ein Methylrest ist.

$c_{14}$) α-Olefine mit 3 bis 4 C-Atomen, vorzugsweise Isobutylen.

$c_{15}$) Acrylsäureester und Methacrylsäureester, insbesondere deren Methyl- bis Butylester.

$c_{16}$) Hexafluorpropylen.

$c_{17}$) Vinylidenfluorid.

$c_{18}$) Trifluorchlorethylen.

Bevorzugte Termonomere (neben Tetrafluorethylen und Ethylen) sind in diesen Terpolymeren die obengenannten Monomeren der Gruppen $c_2$), $c_3$), $c_4$), $c_{11}$), $c_{13}$), $c_{16}$) und $c_{17}$) und davon insbesondere deren als bevorzugt genannte Vertreter.

Es können nach dem erfindungsgemäßen Verfahren auch wäßrige, kolloidale Dispersionen von Quaterpolymeren oder von Copolymeren noch höherer Ordnung gewonnen werden, indem zwei oder mehrere der unter $c_1$) bis $c_{18}$) genannten Monomeren im Gemisch eingesetzt werden. Bevorzugt sind Quaterpolymere aus Tetrafluorethylen/Ethylen/Hexafluorpropylen mit Vinylidenfluorid oder Trifluorchlorethylen und insbesondere solche, die neben Tetrafluorethylen/Ethylen/Hexafluorpropylen noch ein Monomeres aus den obengenannten Gruppen $c_1$) bis $c_{13}$) enthalten, wobei von den letzteren wiederum die Gruppen $c_2$), $c_3$), $c_4$), $c_{11}$) und $c_{13}$) den Vorzug haben. Solche Quaterpolymere bestehen aus 55 bis 30 Mol-%, vorzugsweise 55 bis 40 Mol-%, an copolymerisierten Einheiten des Tetrafluorethylens, 60 bis 40 Mol-%, vorzugsweise 55 bis 45 Mol-%, an copolymerisierten Einheiten des Ethylens, 10 bis 1,5 Mol-%, vorzugsweise 8 bis 3 Mol-% und insbesondere 5 bis 3 Mol-% an copolymerisierten Einheiten des Hexafluorpropylens sowie 2,5 bis 0,05 Mol-%, vorzugsweise 1 bis 0,1 Mol-% und insbesondere 0,8 bis 0,2 Mol-% an copolymerisierten Einheiten des weiteren Monomeren aus den obengenannten Gruppen $c_1$) bis $c_{13}$), wobei sich die 4 Bestandteile jeweils auf 100 Mol-% ergänzen.

Um die vorstehend genannte Zusammensetzung der die wäßrigen, kolloidalen Dispersionen ausmachenden Copolymeren zu erhalten, sind bei der Copolymerisation die Molverhältnisse der eingesetzten Monomeren wie folgt zu bemessen : Vor Beginn der Copolymerisation wird ein Monomerengemisch von Tetrafluorethylen zu Ethylen im Molverhältnis-Bereich von 50 : 50 bis 90 : 10, vorzugsweise von 65 : 35 bis 75 : 25, durch Aufpressen eingestellt. Während der Polymerisation werden Tetrafluorethylen und Ethylen in einem Molverhältnis-Bereich von 40 : 60 bis 60 : 40 zugeführt, und es werden gegebenenfalls die weiteren Monomeren in einer Menge von 0,05 bis 15 Mol-%, vorzugsweise von 0,5 bis 8 Mol-%, bezogen auf das Gesamtmonomerengemisch, zugegeben, wobei dann das Verhältnis Tetrafluorethylen zu Ethylen entsprechend anzupassen ist und der Anteil an Tetrafluorethylen bis auf 30 Mol-% sinken kann.

Nach dem erfindungsgemäßen Verfahren sind wäßrige, kolloidale Dispersionen der genannten Copolymeren mit einem Copolymerisat-Feststoffgehalt von 15 bis 30 Gew.-%, bezogen auf wäßriges Reaktionsmedium, herstellbar. Die Dispersionspartikel besitzen einen mittleren Teilchendurchmesser von 0,05 bis 0,35 µm, vorzugsweise von 0,10 bis 0,25 µm. Die Größenverteilung der Dispersionspartikel ist sehr eng und die Teilchen besitzen eine kugelige Form.

Die Bildung von Koagulat ist beim erfindungsgemäßen Verfahren sehr gering. Wird die Emulsionspolymerisation bis zu einem Feststoffgehalt von 20 bis 22 Gew.-%, bezogen auf wäßriges Reaktionsmedium, geführt, so werden weniger als 1 Gew.-% Koagulat, bezogen auf die Gewichtsmenge an gebildetem, kolloidal verteiltem Copolymerisat-Feststoff, gefunden. Die in rein wäßriger Phase nach dem erfindungsgemäßen Verfahren erzeugten wäßrigen, kolloidalen Dispersionen können direkt auf hohe Feststoffgehalte polymerisiert werden, während die Polymerisation in organischen Lösungsmitteln bereits bei Feststoffgehalten unter 15 Gew.-% beendet werden muß, da die Durchmischung der entstandenen breiigen Aufschlämmungen auf große Schwierigkeiten stößt. Eine Rückgewinnung von organischem Lösungsmittel entfällt.

Die die erfindungsgemäß hergestellten wäßrigen, kolloidalen Dispersionen ausmachenden Copolymerisate besitzen einen MFI-Wert (gemessen bei 300 °C und unter Belastung einer Masse von 11 kg) im Bereich von 5 bis 200 g/10 min. Bei der Verwendung der Dispersion zu Beschichtungs- und Tränkungszwecken resultiert daraus ein problemloses Verschmelzen der so hergestellten Überzüge beim Einbrennen und ein guter Verbund zum Substrat. Den erfindungsgemäß hergestellten Copolymerisat-Dispersionen können in üblicher Weise Füllstoffe und/oder Pigmente zugesetzt werden.

Die erfindungsgemäß hergestellten wäßrigen, kolloidalen Dispersionen besitzen eine Viskosität, gemessen mit einem Rotationsviskosimeter bei 20 °C, im Bereich von 2 bis 4 mPas. Sie besitzen ferner eine außerordentlich hohe Stabilität gegen die Einwirkung von Scherkräften.

Die nach dem erfindungsgemäßen Verfahren hergestellten wäßrigen, kolloidalen Copolymerisat-Dispersionen mit einem Feststoffgehalt von 15 bis 30 Gew.-% können über Ionenaustauscher entsalzt und nach bekannten Verfahren, wie beispielsweise durch Eindampfen in Vakuum, durch Absetz- oder Schichtentrennungsverfahren, durch Elektrodekantation oder auch durch das Verfahren der Ultrafiltration (DE-AS 29 08 001) zu Dispersionen mit hohem Feststoffgehalt von 30 bis 60 Gew.-% aufkonzentriert werden. Die aufkonzentrierten Dispersionen eignen sich insbesondere zum Tränken oder Beschichten von Fäden, Fasern und textilen Flächengebilden, aber auch zur Beschichtung von metallischen und nichtmetallischen Substraten.

Die nach dem erfindungsgemäßen Verfahren hergestellten wäßrigen, kolloidalen Copolymerisat-Dispersionen können auch nach bekannten Verfahren, wie beispielsweise durch Einwirkung mechanischer Scherkräfte oder durch Zusatz von Elektrolyten, koaguliert werden. Das gewonnene Koagulat wird zweckmäßigerweise in der Schmelze granuliert. In dieser Form können die Copolymerisate dann nach thermoplastischen Formgebungsverfahren aus der Schmelze zu Folien, Rohren, Stäben, Spritzgußteilen und anderen Formkörpern verarbeitet werden. Sie eignen sich ferner zur Herstellung von Monofilen mit guten mechanischen Eigenschaften, die sich zu Geweben mit guter thermischer und chemischer Beständigkeit weiterverarbeiten lassen. Dies gilt insbesondere für die den erfindungsgemäß hergestellten Dispersionen zugrundeliegenden Ter- und Quaterpolymeren. Die letzteren sind insbesondere geeignet zur Herstellung von Überzügen für elektrische Leiter. Die so hergestellten Drahtüberzüge sind bei hoher Temperatur nicht spröde und zeigen keine Neigung zur Rißbildung.

Die in der Beschreibung und in den Beispielen angegebenen charakteristischen Größen werden nach folgenden Meßmethoden bestimmt :

1. Mittlere Teilchengröße

Die stark mit Wasser verdünnte Dispersion wird auf ein Kupfernetz aufgetragen und getrocknet. Es wird eine elektronenmikroskopische Aufnahme mit einer Vergrößerung um den Faktor 17 000 aufgenommen, und zwar auf einem Elmiskop II der Firma Siemens. Die Aufnahme wird nochmals um den Faktor 4,25 vergrößert. Das resultierende Bild wird dann mit einem Teilchengrößen-Zählgerät der Firma Zeiss (Typ TGZ 3) nach der Teilchengröße ausgezählt. Der mittlere Teilchendurchmesser errechnet sich aus der resultierenden Verteilungskurve.

2. MFI-Wert (Schmelzindex)

Die Bestimmung erfolgt nach der DIN-Norm 53 735-70 mit einer Düse von 2,1 mm Durchmesser und einer Länge von 8 mm bei 300 °C und einer Belastung mit einer Masse von 11 kg.

3. Gehalt an Tetrafluorethylen

Der Gehalt an Tetrafluorethylen (Gew.-%) ergibt sich aus dem Fluorgehalt, der durch Verbrennung des aus der Dispersion gewonnenen Copolymerisat-Pulvers in einer Wickbald-Apparatur und anschließender Titration mit Thoriumnitrat im Potentiographen bestimmt wird. Bei Vorhandensein weiterer Comonomerer wird der Fluorgehalt um den durch die Comonomeren bedingten Fluoranteil korrigiert.

4. Gehalt an Hexafluorpropylen

Die Bestimmung des Gehaltes an Hexafluorpropylen (in Gew.-%) erfolgt durch IR-Analyse an bei 280 °C gepreßten Folien mit einer Schichtdicke zwischen 100 und 300 µm. Die Schichtdickenmessung wird mit einer Mikrometerschraube vorgenommen. Die Analysen werden mit einem Fourier-Transform-IR-Spetrofotometer der Firma Nicolet, Modell HX 1, durchgeführt. Zur Kompensation wird eine gleichartige Folie aus einem Copolymeren, bestehend ausschließlich aus Tetrafluorethylen und Ethylen, eingesetzt. Ausgewertet wird die Bande $\nu = 490\ cm^{-1}$. Der Hexafluorpropylengehalt errechnet sich nach folgender Formel

Hexafluorpropylen (Gew.-%) = (Extinktion bei $490\ cm^{-1}$/Schichtdicke (mm)) · 3

5. Gehalt an weiteren Comonomeren

Der Einbau an weiteren Comonomeren wird durch Stoffbilanz ermittelt, indem die dem Reaktor zugeführte Gesamtmenge des jeweiligen Monomeren, abzüglich der nach der Copolymerisation im Reaktor verbleibenden Menge des jeweiligen Comonomeren bestimmt.

6. Gehalt an Ethylen

Der Gehalt an Ethylen wird bestimmt aus der Differenz gegen 100.

7. Dichte

Die Bestimmung erfolgt nach der DIN Norm 53 479 an einem aus der Schmelze extrudierten 2 mm dicken Strang.

8. Schmelzpunkt

Der Schmelzpunkt wird angegeben als Minimum des Schmelzbereichs, den man mit einem « Differential-Scanning »-Kalorimeter mißt (DSC-Methode).

Die Erfindung wird durch folgende Beispiele erläutert :

Beispiele 1 bis 14

In den Beispielen 1 bis 14 wird unter folgenden Reaktionsbedingungen gearbeitet :

In einem emallierten Polymerisationsreaktor mit einem Gesamtvolumen von 190 l, ausgestattet mit Stromstörer und Impellerrührer, werden 120 l entsalztes Wasser eingefüllt, in dem 485 g Diammoniumoxalat-Monohydrat, 485 g Perfluoroctansäure und die in Tabelle I angegebene Menge an Malonsäurediethylester gelöst sind. Der Polymerisationsreaktor wird zunächst mit Stickstoff und anschließend mit Tetrafluorethylen gespült. Die Rührgeschwindigkeit wird auf 235 U/min eingestellt, sodann werden die in Tabelle I angegebenen Mengen des ersten und gegebenenfalls des zweiten weiteren Comonomeren vorgelegt. Dann wird Tetrafluorethylen bis zu einem Gesamtmonomerdruck von 13,7 bar und anschließend Ethylen bis zu einem Gesamtmonomerdruck von 17 bar aufgepreßt. Danach wird die Polymerisation durch Einpumpen einer Lösung von Kaliumpermanganat mit einer Konzentration von 20 g $KMnO_4$ pro Liter Wasser gestartet. Die Zufuhr der Kaliumpermanganat-Lösung wird nach dem Polymerisationsstart so einreguliert, daß eine Polymerisationsgeschwindigkeit von etwa 40 bis etwa 100 g/l · h erreicht wird. Die Polymerisationstemperatur liegt bei 26 bis 27 °C. Die entstehende Polymerisationswärme wird mit einem Kühlmedium über den Kühlmantel des Polymerisationsreaktors abgeführt. Der Gesamtmonomerdruck von 17 bar wird automatisch durch kontinuierliche Zuspeisung eines Tetrafluorethylen-Ethylen-Gemisches im molaren Verhältnis von 1 : 1 aufrechterhalten. Während des Polymerisationsverlaufs werden die in Tabelle I angegebenen Mengen der weiteren Comonomeren kontinuierlich nachdosiert. Die Reaktion wird bei einem Copolymer-Feststoffgehalt, bezogen auf eingesetztes wäßriges Reaktionsmedium, von etwa 22 Gew.-% (Beispiel 11 : 27 Gew.-%) durch Entspannen des Monomerengemisches abgebrochen. Gebildetes Koagulat wird durch Filtration abgetrennt, dieses getrocknet und gewogen. Der genaue Feststoffgehalt der filtrierten Dispersion wird durch Spindeln festgestellt. Eingesetzte Menge an

Kaliumpermanganat, Polymerisationsdauer, Menge an wäßriger Dispersion, Polymerisat-Feststoffgehalt, mittlere Teilchengröße und Koagulatmenge sind in Tabelle I angegeben.

Nun wird die Dispersion durch einen schnell laufenden Rührer koaguliert. Der ausgefällte Copolymerisat-Feststoff wird von der Flotte getrennt, mehrmals mit Wasser gewaschen, dann unter Stickstoffatmosphäre 15 Stunden lang bei 200 °C getrocknet und anschließend schmelzgranuliert. Die Zusammensetzung der so erhaltenen Copolymerisate sowie deren Schmelzpunkt und Dichte werden anschließend bestimmt und sind in Tabelle II angegeben. Der $MFI_{11}$-Wert (300 °C) dieser Copolymerisate wird in Tabelle I angeführt.

## Beispiele 15 bis 29

In den Beispielen 15 bis 29 werden verschiedene Kettenübertragungsmittel a) und verschiedene die Dispersion stabilisierende Verbindungen b) bei konstanter Monomerenzusammensetzung eingesetzt. In einem emaillierten Polymerisationsreaktor mit einem Gesamtvolumen von 50 l, ausgestattet mit Stromstörer und Impellerrührer, werden 28 l entsalztes Wasser eingefüllt, in dem die in Tabelle I angeführten Mengen an Kettenübertragungsmittel, an stabilisierender Verbindung, gegebenenfalls an zusätzlichem Ammoniumsalz einer anorganischen Säure sowie 116 g Perfluoroctansäure gelöst sind. In Beispiel 29 werden zusätzlich 0,01 Gew.-% p-Isooctylphenol, oxethyliert mit im Mittel 10 Ethylenoxid-Einheiten, bezogen auf wäßriges Reaktionsmedium, eingesetzt. Der Polymerisationsreaktor wird zunächst mit Stickstoff und anschließend mit Tetrafluorethylen gespült. Die Rührgeschwindigkeit wird auf 260 U/min eingestellt. Sodann werden 440 g an Hexafluorpropylen vorgelegt. Nun wird, wie für die Beispiele 1 bis 14 beschrieben, weitergearbeitet. Während des Polymerisationsverlaufs werden 870 g Hexafluorpropylen als weiteres Comonomeres kontinuierlich nachdosiert. Die Polymerisation wird bei einem Copolymerisat-Feststoffgehalt, bezogen auf eingesetztes wäßriges Reaktionsmedium, von etwa 20 Gew.-% durch Entspannen des Monomerengemisches abgebrochen. Die eingesetzte Menge an Kaliumpermanganat, die Polymerisationsdauer, die Menge an erhaltener wäßriger Dispersion, der Copolymerisat-Feststoffgehalt, die mittlere Teilchengröße, die gebildete Koagulatmenge und der $MFI_{11}$-Wert (300 °C) der erhaltenen Copolymerisate sind in Tabelle I angegeben.

Die in den Beispielen 15 bis 29 hergestellten Copolymerisate setzen sich zusammen aus : 49 Mol-% Tetrafluorethylen, 46,5 Mol-% Ethylen und 4,5 Mol-% Hexafluorpropylen.

(Siehe Tabellen Seite 10 ff.)

Tabelle I

| Beispiel Nr. | 1 | 2 | 3 | 4 | 5 | 6 |
|---|---|---|---|---|---|---|
| Kettenübertragungsmittel, Art | MEE | MEE | MEE | MEE | MEE | MEE |
| (Mol/kg Polymerisatfeststoff) | 0,024 | 0,025 | 0,023 | 0,022 | 0,023 | 0,022 |
| Stabilisierende Verbindung, Art | AO | AO | AO | AO | AO | AO |
| (Mol/l wäßriges Polymerisationsmedium) | 0,028 | 0,028 | 0,028 | 0,028 | 0,028 | 0,028 |
| Zusätzliches Ammoniumsalz, Art | - | - | - | - | - | - |
| (Mol/l wäßriges Polymerisationsmedium) | - | - | - | - | - | - |
| Perfluoroctansäure (g/l wäßriges Polymerisationsmedium) | 4,0 | 4,0 | 4,0 | 4,0 | 4,0 | 4,0 |
| Art des ersten weiteren Comonomeren | I | I | VI | II | II | III |
| Gesamtmenge (g) | 2000 | 2000 | 4600 | 2400 | 2400 | 300 |
| davon vorgelegt (g) | 500 | 500 | 1500 | 600 | 600 | 0 |
| davon nachdosiert (g) | 1500 | 1500 | 3100 | 1800 | 1800 | 300 |
| Art des zweiten weiteren Comonomeren | VI | - | - | VI | - | VI |
| Gesamtmenge (g) | 4600 | - | - | 4600 | - | 4600 |
| davon vorgelgt (g) | 1500 | - | - | 1500 | - | 1500 |
| davon nachdosiert (g) | 3100 | - | - | 3100 | - | 3100 |
| Zugabe an Kaliumpermanganat (g) | 138 | 36 | 198 | 150 | 46 | 116 |
| Polymerisationsdauer (h) | 5,6 | 4,0 | 5,4 | 5,5 | 5,0 | 6,0 |
| Wäßrige Dispersion erhalten (kg) | 156 | 161 | 164 | 169 | 161 | 164 |
| Polymerisatfeststoffgehalt (Gew.-%) | 22,0 | 22,0 | 22,2 | 21,6 | 22,0 | 22,8 |
| Mittlere Teilchengröße (μm) | 0,13 | 0,13 | 0,12 | 0,12 | 0,15 | 0,14 |
| Koagulatbildung (Gew.-%, bezogen auf Polymerisatfeststoff-Menge) | 0,4 | 0,7 | 0,2 | 0,9 | 0,3 | 0,1 |
| $MFI_{11}$-Wert (300 °C) | 33 | 32 | 28 | 24 | 8 | 42 |

Tabelle I (Fortsetzung)

| Beispiel Nr. | 7 | 8 | 9 | 10 | 11 | 12 | 13 | 14 |
|---|---|---|---|---|---|---|---|---|
| Kettenübertragungsmittel, Art | MEE | MEE | MEE | MEE | MEE | MEE | MEE | MEE |
| (Mol/kg Polymerisatfeststoff) | 0,023 | 0,024 | 0,024 | 0,023 | 0,028 | 0,024 | 0,023 | 0,023 |
| Stabilisierende Verbindung, Art | AO | AO | AO | AO | AO | AO | AO | AO |
| (Mol/l wäßriges Polymerisationsmedium) | 0,028 | 0,028 | 0,028 | 0,028 | 0,028 | 0,028 | 0,028 | 0,028 |
| Zusätzliches Ammoniumsalz, Art | - | - | - | - | - | - | - | - |
| (Mol/l wäßriges Polymerisationsmedium) | - | - | - | - | - | - | - | - |
| Perfluoroctansäure (g/l wäßriges Polymerisationsmedium) | 4,0 | 4,0 | 4,0 | 4,0 | 4,0 | 4,0 | 4,0 | 4,0 |
| Art des ersten weiteren Comonomeren | III | IV | IV | V | - | VI | VIII | VIII |
| Gesamtmenge (g) | 300 | 230 | 230 | 1500 | - | 6050 | 400 | 800 |
| davon vorgelegt (g) | 0 | 75 | 75 | 375 | - | 2050 | 100 | 400 |
| davon nachdosiert (g) | 300 | 155 | 155 | 1125 | - | 4000 | 300 | 400 |
| Art des zweiten weiteren Comonomeren | - | VI | - | VI | - | VII | VI | VI |
| Gesamtmenge (g) | - | 4600 | - | 4600 | - | 1580 | 4600 | 4600 |
| davon vorgelegt (g) | - | 1500 | - | 1500 | - | 395 | 1500 | 1500 |
| davon nachdosiert (g) | - | 3100 | - | 3100 | - | 1185 | 3100 | 3100 |
| Zugabe an Kaliumpermanganat (g) | 46 | 240 | 62 | 92 | 59 | 248 | 108 | 146 |
| Polymerisationsdauer (h) | 4,6 | 7,0 | 4,5 | 5,3 | 3,7 | 6,7 | 5,2 | 5,9 |
| Wäßrige Dispersion erhalten (kg) | 163 | 161 | 159 | 167 | 169 | 168 | 166 | 169 |
| Polymerisatfeststoffgehalt (Gew.-%) | 22,1 | 21,8 | 22,0 | 21,6 | 27,0 | 21,7 | 22,2 | 21,2 |
| Mittlere Teilchengröße (μm) | 0,13 | 0,2 | 0,2 | 0,17 | 0,19 | 0,15 | 0,14 | 0,15 |
| Koagulatbildung (Gew.-%, bezogen auf Polymerisatfeststoff-Menge) | 0,3 | 0,8 | 0,4 | 0,7 | 0,8 | 0,7 | 0,5 | 0,8 |
| $MFI_{11}$-Wert (300 °C) | 14 | 37 | 11 | 40 | 20 | 78 | 23 | 40 |

Tabelle I (Fortsetzung)

| Beispiel Nr. | | 15 | 16 | 17 | 18 | 19 | 20 | 21 |
|---|---|---|---|---|---|---|---|---|
| Kettenübertragungsmittel, Art | | MEE | MEE | MEE | MEE | MEE | MEE | MEE |
| (Mol/kg Polymerisatfeststoff) | | 0,026 | 0,026 | 0,026 | 0,025 | 0,025 | 0,025 | 0,015 |
| Stabilisierende Verbindung, Art | | AO | AO | AO | AO | AO | AM | AO |
| (Mol/l wäßriges Polymerisationsmedium) | | 0,015 | 0,007 | 0,015 | 0,015 | 0,015 | 0,032 | 0,029 |
| Zusätzliches Ammoniumsalz, Art | | - | AA | AA | AP | AC | - | - |
| (Mol/l wäßriges Polymerisationsmedium) | | - | 0,016 | 0,016 | 0,016 | 0,016 | - | - |
| Perfluoroctansäure (g/l wäßriges Polymerisationsmedium) | | 4,1 | 4,1 | 4,1 | 4,1 | 4,1 | 4,1 | 4,1 |
| Art des ersten weiteren Comonomeren | | VI | VI | VI | VI | VI | VI | VI |
| Gesamtmenge | (g) | 1310 | 1310 | 1310 | 1310 | 1310 | 1310 | 1310 |
| davon vorgelegt | (g) | 440 | 440 | 440 | 440 | 440 | 440 | 440 |
| davon nachdosiert | (g) | 870 | 870 | 870 | 870 | 870 | 870 | 870 |
| Art des zweiten weiteren Comonomeren | | - | - | - | - | - | - | - |
| Gesamtmenge | (g) | - | - | - | - | - | - | - |
| davon vorgelegt | (g) | - | - | - | - | - | - | - |
| davon nachdosiert | (g) | - | - | - | - | - | - | - |
| Zugabe an Kaliumpermanganat | (g) | 20 | 23 | 17 | 24 | 23 | 40 | 20 |
| Polymerisationsdauer | (h) | 4,4 | 4,5 | 4,5 | 4,6 | 4,3 | 5,5 | 4,1 |
| Wäßrige Dispersion erhalten | (kg) | 36 | 37 | 37 | 37 | 37 | 37 | 37 |
| Polymerisatfeststoffgehalt | (Gew.-%) | 19,9 | 19,7 | 19,8 | 20,1 | 20,5 | 20,1 | 19,3 |
| Mittlere Teilchengröße | (µm) | 0,16 | 0,15 | 0,15 | 0,14 | 0,15 | 0,13 | 0,15 |
| Koagulatbildung (Gew.-%, bezogen auf Polymerisatfeststoff-Menge) | | 0,1 | 0,1 | 0,0 | 0,3 | 0,2 | 0,4 | 0,3 |
| $MFI_{11}$-Wert (300 °C) | | 25 | 22 | 21 | 27 | 24 | 25 | 6 |

Tabelle I (Fortsetzung)

| Beispiel Nr. | 22 | 23 | 24 | 25 | 26 | 27 | 28 | 29 |
|---|---|---|---|---|---|---|---|---|
| Kettenübertragungsmittel, Art | MEE | MME | CEE | BEE | PME | PEE | BME | MEE |
| (Mol/kg Polymerisatfeststoff) | 0,034 | 0,045 | 0,027 | 0,021 | 0,047 | 0,031 | 0,044 | 0,025 |
| Stabilisierende Verbindung, Art | AO | AO | AO | AO | AO | AO | AO | AO |
| (Mol/l wäßriges Polymerisationsmedium) | 0,029 | 0,029 | 0,029 | 0,029 | 0,029 | 0,029 | 0,029 | 0,029 |
| Zusätzliches Ammoniumsalz, Art | - | - | - | - | - | - | - | - |
| (Mol/l wäßriges Polymerisationsmedium) | - | - | - | - | - | - | - | - |
| Perfluoroctansäure (g/l wäßriges Polymerisationsmedium) | 4,1 | 4,1 | 4,1 | 4,1 | 4,1 | 4,1 | 4,1 | 4,1 |
| Art des ersten weiteren Comonomeren | VI | VI | VI | VI | VI | VI | VI | VI |
| Gesamtmenge (g) | 1310 | 1310 | 1310 | 1310 | 1310 | 1310 | 1310 | 1310 |
| davon vorgelegt (g) | 440 | 440 | 440 | 440 | 440 | 440 | 440 | 440 |
| davon nachdosiert (g) | 870 | 870 | 870 | 870 | 870 | 870 | 870 | 870 |
| Art des zweiten weiteren Comonomeren | - | - | - | - | - | - | - | - |
| Gesamtmenge (g) | - | - | - | - | - | - | - | - |
| davon vorgelegt (g) | - | - | - | - | - | - | - | - |
| davon nachdosiert (g) | - | - | - | - | - | - | - | - |
| Zugabe an Kaliumpermanganat (g) | 50 | 43 | 43 | 25 | 35 | 30 | 34 | 45 |
| Polymerisationsdauer (h) | 6,0 | 5,5 | 5,0 | 2,5 | 5,0 | 3,2 | 5,5 | 4,7 |
| Wäßrige Dispersion erhalten (kg) | 37 | 36 | 36 | 36 | 37 | 37 | 37 | 37 |
| Polymerisatfeststoffgehalt (Gew.-%) | 20,6 | 20,3 | 20,0 | 19,8 | 19,9 | 20,3 | 19,7 | 20,5 |
| Mittlere Teilchengröße (µm) | 0,14 | 0,18 | 0,15 | 0,15 | 0,17 | 0,13 | 0,12 | 0,13 |
| Koagulatbildung (Gew.-%, bezogen auf Polymerisatfeststoff-Menge) | 0,4 | 0,7 | 0,8 | 0,1 | 0,4 | 0,3 | 0,8 | 0,2 |
| $MFI_{11}$-Wert (300 °C) | 184 | 64 | 20 | 63 | 36 | 45 | 65 | 58 |

Tabelle II

| Beispiel Nr. | 1 | 2 | 3 | 4 | 5 | 6 |
|---|---|---|---|---|---|---|
| Zusammensetzung der Copolymerisate: | | | | | | |
| Tetrafluorethylen (Mol.-%) | 46,8 | 52,7 | 48,5 | 47,9 | 48,2 | 48,8 |
| Ethylen (Mol.-%) | 48,1 | 46,6 | 46,8 | 48,1 | 51,5 | 46,8 |
| Erstes weiteres Comonomeres, Art | I | I | VI | II | II | III |
| Erstes weiteres Comonomeres (Mol.-%) | 0,8 | 0,7 | 4,7 | 0,4 | 0,4 | 0,3 |
| Zweites weiteres Comonomeres, Art | VI | - | - | VI | - | VI |
| Zweites weiteres Comonomeres (Mol.-%) | 4,4 | - | - | 3,6 | - | 4,2 |
| Dichte ($g/cm^3$) | 1,714 | 1,731 | 1,726 | 1,730 | 1,706 | 1,726 |
| Schmelzpunkt nach DSC ($^{o}C$) | 266 | 282 | 267 | 273 | 284 | 271 |

Tabelle II (Fortsetzung)

| Beispiel | 7 | 8 | 9 | 10 | 11 | 12 |
|---|---|---|---|---|---|---|
| Zusammensetzung der Copolymerisate: | | | | | | |
| Tetrafluorethylen (Mol.-%) | 52,8 | 45,6 | 51,4 | 49,0 | 52,8 | 39,9 |
| Ethylen (Mol.-%) | 46,9 | 49,5 | 48,2 | 46,6 | 47,2 | 53,0 |
| Erstes weiteres Comonomeres, Art | III | IV | IV | V | - | VI |
| Erstes weiteres Comonomeres (Mol.-%) | 0,2 | 0,4 | 0,4 | 0,3 | - | 4,9 |
| Zweites weiteres Comonomeres, Art | - | VI | - | VI | - | VII |
| Zweites weiteres Comonomeres (Mol.-%) | - | 4,5 | - | 4,0 | - | 2,2 |
| Dichte ($g/cm^3$) | 1,741 | 1,717 | 1,736 | 1,717 | 1,738 | 1,720 |
| Schmelzpunkt nach DSC ($^oC$) | 286 | 268 | 293 | 268 | 289 | 248 |

Tabelle II (Fortsetzung)

| Beispiel | 13 | 14 |
|---|---|---|
| Zusammensetzung der Copolymerisate: | | |
| Tetrafluorethylen (Mol.-%) | 46,1 | 45,2 |
| Ethylen (Mol.-%) | 49,1 | 50,1 |
| Erstes weiteres Comonomeres, Art | VIII | VIII |
| Erstes weiteres Comonomeres (Mol.-%) | 0,2 | 0,4 |
| Zweites weiteres Comonomeres, Art | VI | VI |
| Zweites weiteres Comonomeres (Mol.-%) | 4,5 | 4,3 |
| Dichte ($g/cm^3$) | 1,740 | 1,733 |
| Schmelzpunkt nach DSC ($^{o}C$) | 272 | 271 |

Die in den vorstehenden Tabellen I und II gebrauchten Abkürzungen haben folgende Bedeutungen :

MEE = Malonsäurediethylester
MME = Malonsäuredimethylester
CEE = Chloressigsäureethylester
BEE = Bromessigsäureethylester
PME = n-Propionsäuremethylester
BME = n-Buttersäuremethylester
PEE = n-Propionsäureethylester
AO = Diammoniumoxalat-Monohydrat
AA = Ammoniumacetat
AP = Ammoniumdihydrogenphosphat
AC = Ammoniumchlorid
AM = Diammoniummalonat
I = $CF_2 = CF—O—CF_2—CF_2—CF_3$
II = $CF_2 = CF—O—\underset{\underset{CF_3}{|}}{C}F—CF_2—O—CF_2—CF_2—CF_3$
III = $CH_2 = CH—CH_2—O—CF_2—CF_2H$
IV = $CH_2 = CH—O—\underset{\underset{O}{||}}{C}—CH_3$

V =

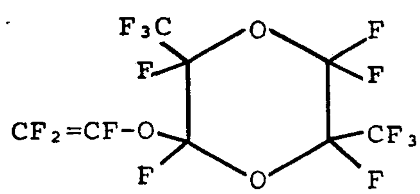

VI = $CF_2 = CF—CF_3$
VII = $CF_2 = CH_2$
VIII = $CH_2 = CH—O—CF_2—CF_2H$

**Ansprüche**

1. Verfahren zur Herstellung von stabilen, wäßrigen kolloidalen Dispersionen von Copolymerisaten, bestehend aus

— höchstens 60 Mol-% an copolymerisierten Einheiten des Tetrafluorethylens,
— 60 bis 40 Mol-% an copolymerisierten Einheiten des Ethylens und
— 0 bis 15 Mol-% an copolymerisierten Einheiten mindestens eines weiteren α-olefinischen Monomeren

durch Copolymerisation dieser Comonomeren in wäßriger Phase in Gegenwart von üblichen fluorierten Emulgatoren, von Mangansäuren oder deren Salzen oder solchen Manganverbindungen, die unter Reaktionsbedingungen in Mangansäuren oder deren Salze übergehen, als Katalysatoren sowie von Kettenübertragungsmitteln,
dadurch gekennzeichnet, daß die Copolymerisation in Gegenwart

a) eines Kettenübertragungsmittels der allgemeinen Formel

$$X—CH_2—COOR$$

worin X = Cl, Br, COOH, COOR', $COCH_3$, $CH_3$, $C_2H_5$ oder $C_3H_7$ ist und R und R' einen Alkylrest mit 1 bis 4 C-Atomen bedeutet, und

b) einer die Dispersion stabilisierenden Verbindung der allgemeinen Formel

$$NH_4-O-\underset{\underset{O}{||}}{C}-Y$$

worin Y = $COONH_4$, COOH, $CH_3$, $CH_2OH$, $CH_2COOH$ oder $CH_2COONH_4$ ist, oder eines Gemisches dieser Verbindungen vorgenommen wird, wobei diese die Dispersion stabilisierende Verbindung in einer

Konzentration von mindestens 0,001 Mol/l, bezogen auf das wäßrige Reaktionsmedium, zugegen ist.

2. Verfahren nach Anspruch 1, dadurch gekennzeichnet, daß das Kettenübertragungsmittel a) in einer Menge von 0,005 bis 0,07 Mol pro 1 kg an gebildetem Copolymerisat-Feststoff zugegeben wird.

3. Verfahren nach Anspruch 1 und 2, dadurch gekennzeichnet, daß zusätzlich zu der die Dispersion stabilisierenden Verbindung b) ein Ammoniumsalz einer anorganischen Nichtmetallsäure in einer Menge von bis zu 0,1 Mol/l wäßriges Reaktionsmedium zugegeben wird.

4. Verfahren nach Anspruch 1 bis 3, dadurch gekennzeichnet, daß als die Dispersion stabilisierende Verbindung b) Diammoniumoxalat zugegeben wird.

5. Verwendung der gemäß Anspruch 1 bis 4 hergestellten Dispersionen zum Tränken oder Beschichten von Fasern, Fäden oder textilen Flächengebilden.

**Claims**

1. A process for the preparation of stable, aqueous colloidal dispersions of copolymers consisting of

— at most 60 mole % of copolymerised units of tetrafluoroethylene,

— 60 to 40 mole % of copolymerised units of ethylene and

— 0 to 15 mole % of copolymerised units of at least one other α-olefinic monomer

by copolymerisation of these comonomers in an aqueous phase in the presence of customary fluorinated emulsifiers and, as catalysts, of manganese acids or salts thereof or those manganese compounds which are converted into manganese acids or salts thereof under the reaction conditions, and of chain transfer agents

which is characterised by carrying out the copolymerisation in the presence of

a) a chain transfer agent of the general formula

$$X—CH_2—COOR$$

in which X is Cl, Br, COOH, COOR, $COCH_3$, $CH_3$, $C_2H_5$ or $C_3H_7$ and R denotes an alkyl radical with 1 to 4 C atoms, and

b) of a compound which stabilises the dispersion and has the general formula

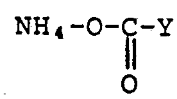 ,

in which Y is $COONH_4$, COOH, $CH_3$, $CH_2OH$, $CH_2COOH$ or $CH_2COONH_4$, or of a mixture of these compounds, this compound which stabilises the dispersion being present in a concentration of at least 0.001 mole/l, relative to the aqueous reaction medium.

2. A process as claimed in claim 1 characterised in that the chain transfer agent a) is added in an amount of 0.005 to 0.07 mole per kg of copolymer solids formed.

3. A process as claimed in either of claims 1 or 2 characterised in that in addition to the compound b) which stabilises the dispersion, an ammonium salt of an inorganic non-metal acid is added in an amount of up to 0.1 mole/l of aqueous reaction medium.

4. A process as claimed in any of claims 1 to 3 characterised in that diammonium oxalate is added as the compound b) which stabilises the dispersion.

5. Use of the dispersions prepared as claimed in any of claims 1 to 4 for impregnating or coating fibers, threads or textile fabrics.

**Revendications**

1. Procédé de préparation de dispersions colloïdales aqueuses stables de copolymères, consistant en

— 60 moles % au maximum de motifs copolymérisés du tétrafluoréthylène,

— 60 à 40 moles % de motifs copolymérisés de l'éthylène, et

— 0 à 15 moles % de motifs copolymérisés d'au moins un autre monomère alpha-oléfinique,

par copolymérisation de ces comonomères en phase aqueuse en présence d'émulsifiants fluorés usuels, d'acides dérivant du manganèse ou de leurs sels ou de composés du manganèse qui se transforment dans les conditions de réaction en des acides du manganèse ou en leurs sels, comme catalyseurs, ainsi que d'agents de transfert des chaînes,

procédé caractérisé en ce qu'on effectue la copolymérisation en présence de :

a) un agent de transfert des chaînes de formule générale

$$X—CH_2—COOR$$

dans laquelle X représente Cl, Br, COOH, COOR', $COCH_3$, $CH_3$, $C_2H_5$ ou $C_3H_7$, et R et R' représentent chacun un radical alkyle ayant 1 à 4 atomes de carbone, et

b) un composé, à rôle de stabilisation de la dispersion, de formule générale

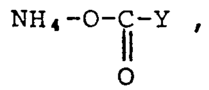

dans laquelle Y représente $COONH_4$, COOH, $CH_3$, $CH_2OH$, $CH_2COOH$ ou $CH_2COONH_4$, ou d'un mélange de ces composés, le composé à rôle de stabilisation de la dispersion étant ajouté en une concentration d'au moins 0,001 mole/l par rapport au milieu aqueux de réaction.

2. Procédé selon la revendication 1, caractérisé en ce qu'on ajoute l'agent a) de transfert des chaînes en une quantité de 0,005 à 0,07 mole pour 1 kg de copolymère solide formé.

3. Procédé selon l'une des revendications 1 et 2, caractérisé en ce que l'on ajoute, en plus du composé b) à rôle de stabilisation de la dispersion, et en une quantité allant jusqu'à 0,1 mole/l du milieu aqueux de réaction, un sel d'ammonium d'un acide minéral dérivant d'un élément non métallique.

4. Procédé selon l'une des revendications 1 à 3, caractérisé en ce que l'on ajoute de l'oxalate de diammonium comme composé b) à rôle de stabilisation de la dispersion.

5. Utilisation des dispersions préparées selon l'une quelconque des revendications 1 à 4 pour imprégner ou enduire des fibres, des fils ou des objets textiles planiformes.